# EUROPEAN PATENT APPLICATION

(11) **EP 1 744 111 A1**
(43) Date of publication of application: **17.01.2007**
(21) Application number: 05719153.8
(22) Date of filing: 16.02.2005
(51) Int. Cl.: F25B 30/06, F24F 5/00, F24J 3/08

(54) **COMBINED HEAT UTILIZATION METHOD EMPLOYING SNOW ICE AS HEAT SOURCE AND HEAT PUMP SYSTEM**

(30) Priority: 16.04.2004 WO PCT/JP2004/005466
(71) Applicant: Mayekawa Mfg. Co., Ltd., Tokyo 135-0046 (JP)
(72) Inventor: SATO, Kazuyoshi; c/o MAYEKAWA MFG.CO., LTD., Koto-ku, Tokyo 1350046 (JP); KUDO, Takanori; c/o MAYEKAWA MFG.CO., LTD., Koto-ku, Tokyo 1350046 (JP)
(74) Representative: Strehl Schübel-Hopf & Partner
(86) International application number: PCT/JP2005/002301
(87) International publication number: WO 2005/100880

(57) **Abstract**

A combined heat utilization method and a heat pump system utilizing nonaqueous antifreeze solution and snow ice as a heat source wherein an automatic system for treating snow ice and utilizing cold heat is employed in a city, an airport or a railway station in a cold snowy region having a problem of conquering or utilizing snow without depending on manual work as much as possible, and snow treatment, high density storage and cold/hot heat utilization are unified into one system. The combined heat utilization method and the heat pump system are **characterized in that** nonaqueous antifreeze solution (2) is used as refrigerant in refrigeration cycle (ice snow heat source heat pump system (3)), the antifreeze solution is cooled to below the snow fall temperature for use as a medium for removing and carrying snow in winter season, the carried and stored snow ice is employed as a heat source and evaporation heat is absorbed, condensation heat of the antifreeze solution is employed for heating snow melting circulation fluid (9) in a region, other snow melting medium or heating circulation fluid, and snow ice cooled and stored in summer season is utilized as the cold heat source for cooling.

## Description

### Technical Field

The present invention relates to a combined heat utilization method employing snow ice as heat source and a heat pump system, wherein a nonaqueous antifreeze solution which is cooled or partially held at natural temperature, thereby processing the snow ice, frozen by the nonaqueous antifreeze solution, on buildings, roads, bridges, railways and airport runways in cold snowy regions where the snowfalls should be conquered and the fallen snows are utilized. Concretely, the ground and roof are prevented from freezing. The snow is fluidized, cooled and frozen. The snow ice as the heat source for the heat pump is utilized for melting the snow on the snowfall surface and for a low temperature heating and at the same time for cooling and heating by the cold and hot energy of the high density frozen snow ice.

### Background Art

Various snow melting and removing methods and apparatuses are disclosed, in order to activate the city functions and smoothly utilize the airports during the winter season in the cold snowy regions.

For example, the below cited Patent Document 1 discloses a snow melting and removing apparatus employing a heat pump. The heat pump apparatus comprises a first circulation route for circulating an antifreeze solution between a cooling unit and a snow removing unit such as a roof, and a second circulation route for circulating the antifreeze solution between a heating unit and a melt snow vessel. In the first circulation route, the low temperature antifreeze solution of minus 20°C cooled by the cooling unit is scattered at the snow removing unit and recovered into a gutter. The snow on the roofs flows down to the gutter, floating on the surface of the antifreeze solution without being solved into the antifreeze solution of which temperature is on or below that of the snow. Then, a snow heat medium separation unit separates the snow in the gutter from the antifreeze solution which is then cooled again by the cooling unit , while the snow is stocked in the melt snow vessel. On the other hand, in the second circulation route, the high temperature heat medium heated at 10°C by the heating unit circulates between the melt snow vessel and the heating unit, thereby melting the snow in the melt snow vessel.

Further, in one of the well-known methods, a heater or heat pipe is buried in a roof or road. In other well-known method, an underground water or sea water is scattered. In another well-known method, a manpower or machine is employed.

However, those apparatuses and methods have disadvantages as explained below. Further, the snow ice processing is not yet combined with the utilization of the heat energy of the snow.

Patent Document 1 has the following disadvantages.
One of the disadvantages is that the snow is inevitably solved into the heat medium, thereby diluting the heat medium and raising the freezing temperature.
Accordingly, the diluted heat medium should be disposed and a new heat medium of a proper density should be supplied, although it is disclosed in Patent Document 1 that the snow floats on the surface of the well-known antifreeze liquid employed in the central heating or the solar system, if the antifreeze liquid is cooled under the snow temperature.

Further, Patent Document 1 merely removes the snow and melts it by the heat pump. The utilization of the snow is not incorporated.

Further, the heater buried in the road consumes a high electric power, while the heat pipe requires a relatively high temperature heat source such as a hot spring, thereby limiting the employment thereof.
The employment of the underground water is unstable for a long time period due to its drying-up. The seawater requires a seawater intake apparatus which should be maintained. Further, the salt of the seawater damages the vehicles and the roads. Further, the employment of the seawater is limited by a geographical condition.

Various machines for personal or public uses requires special adaptation of the users or operating know-how, although an automatic snow removing system in an airport may be employed. However, the various machines have such disadvantages that: the snow removing at a massive snowfall takes a long time, because the snow removing process is started after the snowfall at a certain degree; the snow removing is still an irregular process of a labor concentration type; and social effects (such as the traffic jam, the cancellation of an air plane service and the environmental load due to the fossil fuel consumption) are not yet overcome. Further, the conventional machines do not yet incorporate the utilization of the snow ice.
Patent Document 1 : JP 62-133244A (1987)

### Disclosure of the Invention

### Problems to be solved

An object of the present invention is to provide a combined heat utilization method and a heat pump system utilizing nonaqueous antifreeze solution and snow ice as a heat source. In the present invention, the snowfall processing and the storage of the high density frozen snow ice and the utilization of the snow heat energy are unified and automatically executed, without depending on manual work as much as possible, in a city, an airport or a railway station in a snowy region which needs to conquer and utilize the snowfall.

### Means to solve the Problems

The first means to solve the above-explained problems is a combined heat utilization method for removing and melting snow on a snowfall surface by using a heat pump of which heat source is snow ice, which comprises the steps of: removing the snow in winter by scattering a low temperature heat medium of nonaqueous antifreeze liquid of a temperature on or below a snowfall temperature cooled by an evaporator of the heat pump; recovering the antifreeze liquid and the snow, then separating the snow from the antifreeze liquid; reusing the antifreeze liquid as the low temperature heat medium for the heat pump; utilizing the condensation heat for heating snow melting circulation medium, snow melting medium, or facility warming circulation medium; and utilizing snow ice for cold energy source for cooling or refrigerating.

In the first means, the nonaqueous antifreeze liquid is used, in order to solve the problems in Patent Document 1. The nonaqueous antifreeze liquid is preferably of high fluidity at a low temperature and of a fewer environmental effect such as zero ozone destroying coefficient. For example, hydrofluoroether is applicable. The nonaqueous antifreeze liquid is scattered on the snowfall surface, thereby automatically transporting by a snow ice recover mechanism such as a rain drain or a snow groove and separating the the nonaqueous antifreeze liquid in a snow storage vessel. Thus, snowfall is automatically processed, recovered and stored.

The second means is a heat pump system for removing and melting snow on a snowfall surface by using a heat pump of which heat source is snow ice, which comprises: an evaporator for cooling a low temperature heat medium of a nonaqueous antifreeze liquid at a temperature on or below a snowfall temperature; a tube route for transporting the low temperature heat medium to the snowfall surface; a scattering unit provided on the tube route for scattering the low temperature heat medium; a recovery mechanism for recovering scattered low temperature heat medium and snow ice; a snow ice storage vessel for storing recovered low temperature heat medium and recovered snow ice; a separation unit for separating the scattered and recovered low temperature heat medium from the recovered snow ice; a condenser for heating a brine of snow melting circulation fluid, snow melting medium, or warming circulation fluid; and a circulation route for circulating the brine (antifreeze liquid) between the condenser and a heat utilizing object.

In the second means, the nonaqueous antifreeze liquid is cooled by an evaporator of the heat pump, is transported to the snowfall surface, thereby fluidizing and transporting the snow ice as it is as a solid thing to the snow storage vessel in order to repeatedly cool the snow ice and freezing it in a high density state. Further, in summer or in a season without the snowfall, the cold energy is utilized by making the nonaqueous antifreeze liquid contact with the stored snow ice and circulating the nonaqueous antifreeze liquid between the snow storage vessel and the cooling load.
On the other hand, the condensation heat generated by a condenser of the heat pump is simultaneously utilized for heating a circulation medium for melting the snow ice and the facility heating.

Preferably, in the first means, the removed snow and nonaqueous antifreeze liquid may be recovered into the snow storage vessel and the nonaqueous antifreeze liquid is separated from the removed snow.
Preferably, the first means may comprise the steps of: scattering a low temperature heat medium of nonaqueous antifreeze liquid on a snowfall surface including a runway, taxiway, apron or aircraft in a cold snowy region, thereby fluidizing snow ice from the time when a snowfall starts or the snow ice is already frozen, dropping the snow ice into a gutter provided on the snowfall surface, in order to remove the snow; recovering the antifreeze liquid and the snow, then separating the antifreeze liquid from the snow; reusing at least a part of the antifreeze liquid as the low temperature heat medium for the heat pump; utilizing the condensation heat for heating a snow melting circulation fluid and warming liquid for a pavement and a parking lot around the airport; and utilizing recovered snow ice for cold energy source for cooling or refrigerating facilities of the airport.

Preferably, the first means may comprise the steps of: scattering the low temperature heat medium of nonaqueous antifreeze liquid on a roof of a building including a food factory, or on a snowfall surface including a solar panel or a road in the food factory in a cold snowy region, thereby fluidizing snow ice from the time when a snowfall starts or the snow ice is already frozen, dropping fluidized snow ice into a gutter provided on the snowfall surface in order to remove the snow from the snowfall surface; recovering the antifreeze liquid and the snow, then separating the antifreeze liquid from the snow ice; reusing at least a part of the antifreeze liquid as the low temperature heat medium for the heat pump; heating a snow melting circulation fluid and a warming liquid for a pavement and a parking lot around the food factory; and utilizing the snow ice for cold energy source for cooling or refrigerating facilities of the food factory.

Preferably, the first means may comprise the steps of: scattering the low temperature heat medium of nonaqueous antifreeze liquid on a snowfall surface of a railway, railway station, or train in a cold snowy region, thereby melting or physically fluidizing snow ice from the time when a snowfall starts or the snow is already frozen, dropping the snow ice into a gutter provided on the snowfall surface, in order to remove snow; recovering the antifreeze liquid and the snow, then separating the antifreeze liquid from removed snow; reusing at least a part of the antifreeze liquid as the low temperature heat medium for the heat pump; heating a snow melting circulation fluid and a warming liquid for a pavement and a parking lot around the railway station; and utilizing the snow ice for cold energy source for cooling or refrigerating facilities of the railway station.

Preferably, in the first means, the nonaqueous antifreeze liquid of natural temperature may be scattered on the snowfall surface such as an airport runway, taxiway, apron, aircraft, building site, roof of food and agricultural product factory, solar panel, road around building, railway and train, thereby meting a part of the snow and automatically transporting the mixture of the snow ice and the water component to the snow processing facility wherein the nonaqueous antifreeze liquid is separated from the snow ice by a solid liquid separation means (preferably of a structure which can introduce a warm heat medium) and the nonaqueous antifreeze liquid is separated from the water component due to the density difference between them. Thus, the antifreeze liquid is re-circulated, thereby automatically executing continuous snow ice processing, preventing the snowfall surface from freezing and removing a massive snow.

Preferably, a part of the snow ice transported from the snow gutter is flowed into the snow storage vessel and the liquid component is separated from the solid component. The antifreeze liquid is circulated between the snow storage vessel and the evaporator of the heat pipe by making the nonaqueous antifreeze liquid directly contact with the stored snow ice, in order to cool and freeze the stored snow ice at high density.
Similarly, while recovering the snow ice cold energy, the condensation heat generated by the condenser of the heat pump is utilized for heating the circulation liquid for snow melting and facility warming. The solid liquid separation means of the snow ice processing facility is of a structure which can circulate the warm heat medium which absorbs the condensation heat, thereby melting the piled up snow and separating the nonaqueous antifreeze liquid from the melted snow by the solid liquid separation means.
In summer or in a season without the snowfall, the condensation heat is circulated in air between the food refrigerator and the snow storage vessel by making the nonaqueous antifreeze liquid directly contact with the stored snow ice, in order to refrigerate the food at high humidity.

Due to the present invention, in a snowfall season, the snow on the snowfall surface is automatically removed, cleared away, melted, prevented from freezing on the snowfall surface, thereby freezing the stored snow ice at high density and at the same time utilizing the warm heat for the snow melting and facility warming by recovering the cold energy. On the other hand, in summer, the cold energy of the high density snow ice is effectively utilized, thereby contributing to the reduction of the electric power consumption, cooling waste heat, in its turn contributing to the measures against the global warming and the heat island.

### Brief description of Drawings

FIG. 1 is an illustration of a combined heat utilization system of Embodiment 1 with a heat pump, wherein snow is removed and melt by nonaqueous antifreeze liquid.
FIG. 2 is an illustration of a combined heat utilization system of Embodiment 2 for removing and melting snow for airport facilities.
FIG. 3 is an illustration of a combined heat utilization system of Embodiment 3 for removing and melting snow for a food manufacturing factory.

### Explanation of Reference Numerals

- 1: SNOWFALL
- 2: ANTIFREEZE LIQUID
- 3: HEAT PUMP
- 4: EVAPORATOR
- 5: SNOW ICE RECOVERING MECHANISM
- 6: SNOW ICE VESSEL
- 7: SOLID LIQUID SEPARATION UNIT
- 8: CONDENSER
- 9: SNOW MELTING CIRCULATING MEDIUM
- 10: SWITCH
- 11: COOLING LOAD
- 12: SNOW ICE
- 13: WATER COMPONENT
- 14: PUMP
- 15: WASTEWATER PROCESSING UNIT
- 16: PUMP

### Best Embodiment for Carrying Out the Invention

Embodiments of the present invention are explained, referring to the drawings. It should be understood that the present invention is not limited to sizes, materials, shapes, relative arrangements and so on of the constituent components.

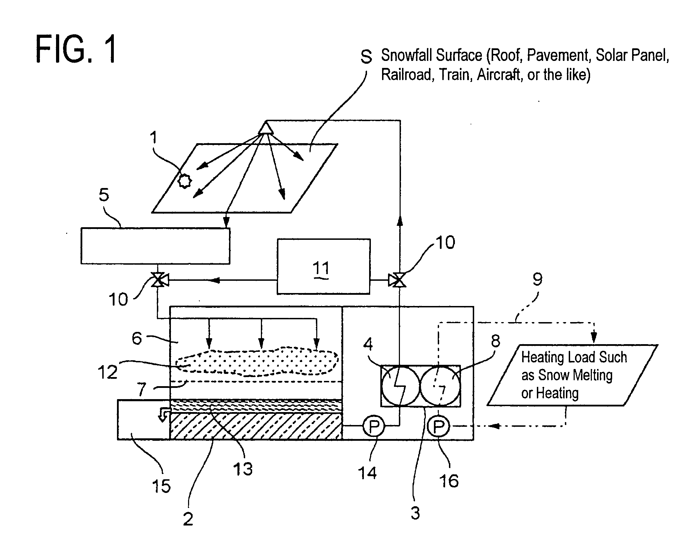

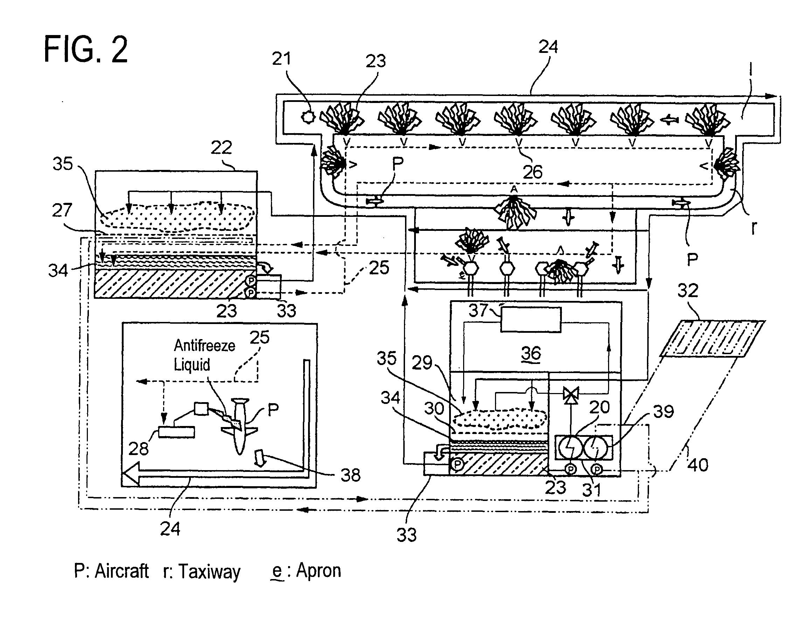

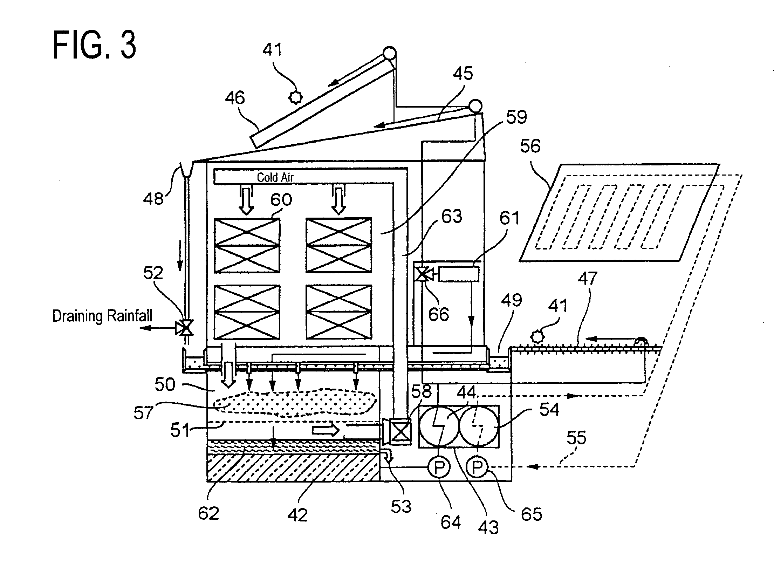

FIG. 1 is an illustration of a combined heat utilization system with a heat pump of Embodiment 1, wherein snow is removed and melt by nonaqueous antifreeze liquid. FIG. 2 is an illustration of a combined heat utilization system of Embodiment 2 for removing and melting snow for airport facilities. FIG. 3 is an illustration of a combined heat utilization system of Embodiment 3 for removing and melting snow for a food factory.

### Embodiment 1

FIG. 1 shows a heat pump utilizing the snow ice heat source for removing and transporting the snow on the surface such as a roof, road, solar panel, railway, train, aircraft and for making high density frozen snow ice and utilizing its cold heat energy and at the same time the heat pump recovering the cooling energy for melting the snow and facility heating.

As shown in FIG. 1, when a snowfall 1 is detected by a not-shown snowfall detector, a nonaqueous antifreeze liquid 2 of high fluidity at low temperature in a snow ice vessel 6 is circulated by a pump 14, is cooled under the snow temperature by an evaporator 4 in the heat pump with the snow ice heat source, is scattered on the snowfall surface S. Thus, the snow on the snowfall surface is frozen and fluidized into a snow ice transport mechanism 5, is assembled into a snow ice vessel 6, is separated from the water component and the antifreeze liquid. The antifreeze liquid is circulated again by the pump 14.

At the same time, the heat pump utilizing the snow ice as a heat source is driven in a heat recovery heat pump mode by cooling the antifreeze liquid 2 by the evaporator 4, while a snow melting circulating medium 9 (the antifreeze liquid, or underground water) is heated by a condensation heat generated by the condenser 8 and is circulated by a pump 16, thereby melting the snow (such as that on the pavement around the building) on the snowfall surface which is improper for scattering the antifreeze liquid or thereby heating the facilities.
On the other hand, the cold heat energy is effectively utilized by circulating the antifreeze liquid between the cooling load and the snow ice 12, by using a switch 10, if necessary. The solved-out water 13 after utilizing the cold energy is separated from the nonaqueous antifreeze liquid in accordance with the density difference from the water component and is processed by a wastewater processing unit 15.

### Embodiment 2

Next, Embodiment 2 is explained, referring to FIG. 2. As shown in FIG. 2, the nonaqueous antifreeze liquid 23 is scattered on the snow and snow ice attached on the airport runway "1", the taxiway "r", the apron "e" and the aircraft "P", thereby fluidizing, removing and melting the snow. The fluidized snow is fallen into gutter 24. The antifreeze liquid 23 is circulated, thereby continuously removing the snow. A part of the snow ice is separated and stored. FIG. 2 shows a cold energy utilization system for freezing the snow ice at a high density by the snow ice heat source heat pump 31 and a heating system for melting the snow and heating facilities by the heat energy recovery system.

As shown in FIG. 2, when a snowfall 21 is detected by a not-shown snowfall detector, a nonaqueous antifreeze liquid 23 of a high fluidity at a natural temperature or a temperature on or below an outer temperature stored in a snow ice processing facility 22 is circulated to the gutter 24 and is supplied to an antifreeze liquid circulation pipe 25. Thus, the antifreeze liquid 23 is scattered on the road surface from nozzles provided at the runway, taxiway and apron. Thus, the snow ice at the initial snowfall or at the frozen state is fluidized and removed as indicated by an arrow 38, or is fallen into the gutter 24 by utilizing the human operation together, thereby transporting the lump of the snow ice including the water to the snow ice processing facility 22 where the snow ice 35 is separated from the water as much as possible by a solid liquid separation unit 27 which circulate the warm heat medium.

Similarly, the antifreeze liquid is scattered on the aircraft "P" from a snow ice removing vehicle 28 which is supplied with the antifreeze liquid from the antifreeze liquid circulation pipe 25. Thus, the snow ice 35 is fallen into the gutter 24 and is transported to a not-shown processing facility.
Simultaneously, a part of the snow ice 35 is transported to a snow ice storing vessel 29 in an airport building 36, thereby separating the sherbet-like snow from the water 34 by a solid liquid separation facility 30 and storing the separated snow. Thus, the cold heat of the stored snow is utilized for cooling or a cooling aid such as an air conditioner 37 in the airport facility.

Further, by using the snow ice heat source heat pump 31 together, the antifreeze liquid 23 is cooled by an evaporator 20, thereby freezing the snow flowing into the airport facility. The frozen snow is stored and utilized as a high density cold heat energy. On the other hand, the brine (a snow melting circulation medium 40) which absorbs a condensation heat generated by a condenser 39 is circulated on the surface of the pavement and parking lot, thereby executing the snow melting 32.
Alternatively, the warm energy of the snow melting circulation medium 40 which absorbs the above-mentioned condensation heat is supplied to a solid liquid separation unit 27 which circulates a warm energy medium in the snow processing facility 22, thereby melting the piled-up snow ice on the snowfall surface, or separating the water component from the snow ice spending some time period, by using the snow removing operation together and draining out the water at a draining unit 33.

### Embodiment 3

Next, Embodiment 3 is explained, referring to FIG. 3. As shown in FIG. 3, the nonaqueous antifreeze liquid 42 is scattered on the snow 41 on a warehouse roof of a food and agricultural product factory of the snow ice storage type, the solar panel and the roads surrounding the building, thereby fluidizing, removing and melting the snow. The fluidized snow is fallen into the water gutter or snow groove. The antifreeze liquid 42 is circulated, thereby continuously removing the snow. The snow ice is separated and stored. FIG. 3 shows an example for freezing the snow 41 at a high density, for melting the snow on the road surrounding the building and for utilizing the high density snow ice for high humidity cooling and air conditioning.

As shown in FIG. 3, when a snowfall 41 is detected by a not-shown snowfall detector, a nonaqueous antifreeze liquid 42 of a high fluidity at a natural temperature or a temperature on or below the snow temperature cooled by an evaporator 44 in the snow ice heat source heat pump 43 is scattered on the building roof 45, solar panel surface 46 or road 47. Thus, the snow is sequentially fluidized, melted and fallen into the water gutter 48 and snow groove 49. The nonaqueous liquid is separated from the snow ice by a solid liquid separation unit 51 in the snow ice storage vessel 50 and recirculated.

A rainfall is drained by switching a branch unit 52 to a rainfall draining route. Further, a part of the rainfall fallen into the snow groove is drained from the antifreeze liquid vessel as indicated by an arrow 53, due to the density difference between the nonaqueous antifreeze liquid 42 and the water 62.
Simultaneously, the antifreeze liquid 42 is circulated by a pump 64, is cooled by the evaporator 44, thereby operating the heat energy recovery heat pump. The snow melting circulating medium 55 (antifreeze liquid or underground water) which absorbs the condensation heat at the condenser 54 is circulated by a pump 65, thereby melting the snow on the road surface and heating a facility 56.
On the other hand, the cold air of the stored snow ice of high density is absorbed by a fan 58 and is circulated through a duct 63 to the agricultural product warehouse 59, thereby cooling the foods and agricultural products 60 at low temperature and at high humidity. Alternatively, the nonaqueous liquid 42 is sent to an air conditioner 61 by a switching unit 66, thereby making the returning liquid directly contact with snow ice 57.

### Advantages of the Invention

The combined heat utilization method and the heat pump utilizing the snow ice as the heat source as explained above have following remarkable advantages in daily lives in cold snowy cities and airports which should conquer the snowfall (snow ice processing, prevention of freezing, low temperature measure and so on) and which intend to utilize the snowfall (utilization of cold energy of the snow ice, utilization of the snow and ice for various special events and so on).
The snow ice heat source heat pump wherein the nonaqueous antifreeze liquid is cooled and circulated, makes it possible to store the high density snow ice under a presupposition of the snow ice utilization and to melt the snow, by the condensation heat in the freezing cycle, under another presupposition of executing the low temperature heating. The snow ice heat source heat pump enjoys the similar advantages to the conventional air heat source snow melting heat pump generally used in the winter season. The snow ice heat source heat pump has various advantages over the conventional food refrigeration and the cooling in the summer season by the conventional snow melting method, because the present invention stores the heat energy of the high density frozen snow ice.

Due to the present invention, the snow storage capacity of the snow ice storage vessel is made compact (1/3 through 2/3), compared with the conventional capacity and the cooling time period (snow storage time period) is made longer (1.5 through 2 times) than the conventional one. In the winter season, obtained is a combined added value that the snow is removed , melted and the facility is heated.
In the summer season, operations of the conventional cooling apparatuses are greatly reduced, CO₂ generation due to the electric power consumption and fuel consumption is reduced. Further, the condensation heat generated by the heat pump is not directly emitted to the atmosphere, thereby contributing to measures against the global warming and the heat island.

In the present invention, the nonaqueous antifreeze liquid (cooled or at a natural temperature) is scattered on the airport facility or the aircraft, thereby fluidizing, removing and melting the snow. A part of the snow is frozen and stored for utilizing the cold energy for the airport building, while the condensation heat generated by the condenser in the heat pump is utilized for melting the snow on the roads surrounding the airport building and for heating the facilities. Thus, the present invention has the following advantages.
By starting removing the snow when the snowfall begins, the runway closure is not almost caused at all, thereby reducing an economic loss due to cancellation of plane service. The snow removing from the runway, taxiway, apron and so on is fundamentally automated. Accordingly, the human operation is greatly reduced, thereby automatically processing the piled up snow transported from the roads under a time management different from that of the irregular snowfall. Thus, the operators and the snow removing machines are reduced.

Although the antifreeze liquid is used only once by the glycol heating and injection in the conventional snow removing from the aircraft, the antifreeze liquid in the present invention is highly reused and the load upon the wastewater processing facility is greatly reduced. Further, the antifreeze liquid of high fluidity at low temperature can be supplied timely from the antifreeze supply tube to the snow removing operation vehicle. Accordingly, it is not required to waste any preparation time to heat the glycol. Further, due to the storage of the high density frozen snow ice and due to the operation of the cold energy recovery heat pump, the snow around the airport building is melted and the airport facilities are cooled, while in summer the conventional air conditioning and refrigerating facilities become needless, because the stored snow ice is utilized in the present invention. Thus, the electric power consumption peak is reduced, the artificial waste heat emission to the atmosphere is suppressed, thereby contributing to the measures against the global warming and the heat island.

Further, for the roof or rooftop of the food factory and other building, the solar panel and the roads around the building, the nonaqueous antifreeze liquid of high fluidity at low temperature is cooled at a temperature on or below the snow temperature or at a natural temperature is scattered on the snow. The snow is fluidized, transported, separated from the water component and is frozen at high density. At the same time, the snow on the road is melted and the facilities are warmed by the cold energy recovery heat pump. Thus, the present invention has the following advantages.
The operations of the conventional refrigerating facilities, the electric power consumption, the operation cost and the CO₂ generation are greatly reduced. Further, effective measures to the global warming and the heat island are given by the present invention, because the condensation heat generated by the condenser is not directly emitted to the outside.
Further, the human labor and cost are reduced, because the snow is automatically fluidized and transported. Thus, the operation efficiency of the solar panel in winter is improved. The use of the solar panel is increased by the combined utilization of the snow melting in winter and the cooling in summer in the cold snowy region.

### Industrial Applicability

The present invention is applicable to a method and heat pump system utilizing the cold heat energy of the frozen high density snow ice, suitable for cities, airport, railway stations in cold snowy regions which have to conquer and wish to utilize snowfalls, wherein: the nonaqueous antifreeze liquid (at a natural temperature or cooled) is circulated for the automatic snow processing, the prevention of freezing of the road surface and freezing of the fluidized snow ice; and the cooling heat recovery heat pump is operated for the combined utilization of the snow melting and low temperature warming of the facilities and of the cooling and refrigerating.

## Claims

1. A combined heat utilization method for removing and melting snow on a snowfall surface by using a heat pump of which heat source is snow ice, which comprises the steps of:
removing said snow in winter by scattering a low temperature heat medium of nonaqueous antifreeze liquid of a temperature on or below a snowfall temperature cooled by an evaporator of said heat pump;
recovering said antifreeze liquid and said snow, then separating said snow from said antifreeze liquid;
reusing said antifreeze liquid as said low temperature heat medium for said heat pump;
utilizing said condensation heat for heating snow melting snow melting medium, or facility warming circulation medium
utilizing snow ice for cold energy source for cooling or refrig

2. The combined heat utilization method according to claim 1, wherein said snow and said antifreeze liquid are recovered into a snow storing vessel, thereby separating said antifreeze liquid from said snow by solid liquid separation means.

3. The combined heat utilization method according to claim 1, which comprises the steps of:
scattering said low temperature heat medium of nonaqueous antifreeze liquid on a snowfall surface including a runway, a taxiway, an apron or an aircraft in a cold snowy region, thereby fluidizing snow ice from the time when a snowfall starts or said snow ice is already frozen, dropping said snow ice into a gutter provided on said snowfall surface, in order to remove said snow;
recovering the antifreeze liquid and the snow, then separating said antifreeze liquid from said snow;
reusing at least a part of said antifreeze liquid as said low temperature heat medium for said heat pump;
utilizing said condensation heat for heating a snow melting circulation fluid and warming liquid for a pavement and a parking lot around said airport; and
utilizing recovered snow ice for cold energy source for cooling or refrigerating facilities of said airport.

4. The combined heat utilization method according to claim 1, which comprises the steps of:
scattering said low temperature heat medium of nonaqueous antifreeze liquid on a roof of a building including a food factory, or on a snowfall surface including a solar panel or a road in said food factory in a cold snowy region, thereby fluidizing snow ice from the time when a snowfall starts or said snow ice is already frozen, dropping fluidized snow ice into a gutter provided on said snowfall surface in order to remove said snow from said snowfall surface;
recovering the antifreeze liquid and the snow, then separating said antifreeze liquid from said snow ice;
reusing at least a part of said antifreeze liquid as said low temperature heat medium for said heat pump;
heating a snow melting circulation fluid and a warming liquid for a pavement and a parking lot around said food factory; and
utilizing said snow ice for cold energy source for cooling or refrigerating facilities of said food factory.

5. The combined heat utilization method according to claim 1, which comprises the steps of:
scattering said low temperature heat medium of nonaqueous antifreeze liquid on a snowfall surface of a railway, a railway station, or a train in a cold snowy region, thereby melting or physically fluidizing snow ice from the time when a snowfall starts or said snow is already frozen, dropping said snow ice into a gutter provided on said snowfall surface, in order to remove snow;
recovering the antifreeze liquid and the snow, then separating said antifreeze liquid from removed snow;
reusing at least a part of said antifreeze liquid as said low temperature heat medium for said heat pump;
heating a snow melting circulation fluid and a warming liquid for a pavement and a parking lot around said railway station; and
utilizing said snow ice for cold energy source for cooling or refrigerating facilities of said railway station.

6. A heat pump system for removing and melting snow on a snowfall surface by using a heat pump of which heat source is snow ice, which comprises:
an evaporator for cooling a low temperature heat medium of a nonaqueous antifreeze liquid at a temperature on or below a snowfall temperature;
a tube route for transporting said low temperature heat medium to said snowfall surface;
a scattering unit provided on said tube route for scattering said low temperature heat medium;
a recovery mechanism for recovering scattered low temperature heat medium and snow ice;
a snow ice storage vessel for storing recovered low temperature heat medium and recovered snow ice;
a separation unit for separating said scattered and recovered low temperature heat medium from said recovered snow ice;
a condenser for heating a brine of snow melting circulation fluid, snow melting medium, or warming circulation fluid; and
a circulation route for circulating said brine between said condenser and a heat utilizing object.
